# EUROPEAN PATENT APPLICATION

(11) **EP 0 926 192 A1**
(43) Date of publication of application: **30.06.1999**
(21) Application number: 98123672.2
(22) Date of filing: 11.12.1998
(51) Int. Cl.: C08L 9/00, C08L 9/06, C08K 3/36, B60C 1/00

(54) **Rubber blend for tire tread compounds**

(30) Priority: 26.12.1997 US 68881 P
(71) Applicant: THE GOODYEAR TIRE & RUBBER COMPANY, Akron, Ohio 44316-0001 (US)
(72) Inventor: Colvin, Howard Allen, Tallmadge, Ohio 44278 (US); Senyek, Michael Leslie, Tallmadge, Ohio 44278 (US); Futamura, Shingo, Wadsworth, Ohio 44281 (US)
(74) Representative: Leitz, Paul

(57) **Abstract**

This invention relates to a rubber blend that is easily processable and that can be beneficially used in tire tread rubber compositions. This blend offers particular advantages in cases where silica is used as a filler in the blend. This is because it is possible to attain a given level of modulus while employing a much lower level of silica coupling agent. The blends of this invention can also be easily mixed while utilizing a mixing cycle of reduced duration. These rubber blends also offer excellent tire performance characteristics such as good traction, treadwear and rolling resistance. This invention more specifically discloses a rubber blend which is particularly suitable for utilization in making tire tread compounds which is comprised of: (1) from about 1 phr to about 70 phr of a vinylpyridine containing rubbery polymer, wherein said vinylpyridine containing rubbery polymer contains from about 0.5 weight percent to about 15 weight percent vinylpyridine and wherein said vinylpyridine containing rubbery polymer has a Mooney ML 1+4 viscosity of less than about 25, (2) from about 30 phr to about 99 phr of a styrene-butadiene rubber, wherein said styrene-butadiene rubber has a Mooney ML 1+4 viscosity which is within the range of about 40 to about 150, (3) a silica filler and (4) a silica coupling agent.

## Description

### Background of the Invention

It is increasingly expected for tire tread compounds to provide higher and higher levels of performance characteristics. For instance, it is normally expected for tires to exhibit good traction characteristics on both dry and wet surfaces. However, it has traditionally been very difficult to improve the traction characteristics of a tire without compromising its rolling resistance and treadwear. Low rolling resistance is important because good fuel economy is virtually always an important consideration. Good treadwear is also an important consideration because it is generally the most important factor which determines the life of the tire.

The traction, treadwear and rolling resistance of a tire is dependent to a large extent on the dynamic viscoelastic properties of the elastomers utilized in making the tire tread. In order to reduce the rolling resistance of a tire, rubbers having a high rebound have traditionally been utilized in making the tire's tread. On the other hand, in order to increase the wet skid resistance of a tire, rubbers which undergo a large energy loss have generally been utilized in the tire tread. In order to balance these two viscoelastically inconsistent properties, mixtures of various types of synthetic and natural rubber are normally utilized in tire treads. For instance, various mixtures of styrene-butadiene rubber and polybutadiene rubber are commonly used as a rubber material for automobile tire treads. However, such blends are not totally satisfactory for all purposes.

Rubbers having intermediate glass transition temperatures (-70°C to -40°C) compromise rolling resistance and treadwear without significantly increasing traction characteristics. For this reason, blends of rubbers having low glass transition temperatures and rubbers having high glass transition temperatures are frequently utilized to attain improved traction characteristics without significantly compromising rolling resistance or treadwear. However, such blends of rubbers having low glass transition temperatures and rubbers having high glass transition temperatures exhibit poor processability. This major disadvantage associated with such blends has greatly hampered their utilization in making tire tread compounds.

United States Patent 2,885,381 discloses a composition of matter comprising a copolymer of a conjugated diene and a heterocyclic nitrogen containing monomer having a sole CH₂=CH- substituent, such as 2-vinylpyridine, said copolymer having been compounded with 25-100 weight parts per 100 parts of said copolymer of a finely ground mineral pigment selected from the group consisting of silica and aluminum silicate as the sole reinforcing agent.

In recent years, there has been a trend to include silica as a filler in tire tread compounds to further improve traction characteristics. United States Patent 5,036,133 discloses a vulcanizable rubber composition that is comprised of: (A) an uncured natural or synthetic isoprene rubber, or one or more uncured butadiene-based synthetic rubbers, or uncured blends thereof, said uncured rubbers being sulfur vulcanizable, (B) a silica filler, (C) sulfur, (D) an organic accelerator and (E) a vinylpyridinebutadiene interpolymer co-activator, said interpolymer co-activator (E) containing from about 20 percent to about 65 percent by weight of vinylpyridine units, the amount of said vinylpyridine-butadiene copolymer co-activator being from about 0.5 to 2 parts by weight per 100 parts by weight of said rubber.

### Summary of the Invention

This invention relates to a tire tread compound that is easily processable which can be used to improve the treadwear, rolling resistance and traction characteristics of tires. The tire tread compounds of this invention are a blend of (1) from about 1 phr to about 70 phr of a vinylpyridine containing rubbery polymer, wherein said vinylpyridine containing rubbery polymer contains from about 0.5 weight percent to about 15 weight percent vinylpyridine and wherein said vinylpyridine containing rubbery polymer has a Mooney ML 1+4 viscosity of less than about 25, (2) from about 30 phr to about 99 phr of a styrene-butadiene rubber, wherein said styrene-butadiene rubber has a Mooney ML 1+4 viscosity which is within the range of about 40 to about 150, (3) a silica filler and (4) a silica coupling agent. This rubber blend is surprisingly easy to process which makes the concept of this invention commercially feasible. In fact, since mixing times can be reduced by utilizing the blends of this invention, cost savings are also normally realized. Further significant cost savings are also normally realized because the amount of expensive silica coupling agent needed to attain a desired modulus can be greatly reduced by employing these blends. Thus, the tire tread compounds of this invention can be utilized in making tires having greatly improved rolling resistance and treadwear characteristics at reduced cost without sacrificing traction. In other words, by utilizing the rubber compounds of this invention all of the benefits of conventional silica compounding are realized with reduced mix time and less coupling agent being required.

This invention more specifically discloses a rubber blend which is particularly suitable for utilization in making tire tread compounds which is comprised of: (1) from about 1 phr to about 70 phr of a vinylpyridine containing rubbery polymer, wherein said vinylpyridine containing rubbery polymer contains from about 0.5 weight percent to about 15 weight percent vinylpyridine and wherein said vinylpyridine containing rubbery polymer has a Mooney ML 1+4 viscosity of less than about 25, (2) from about 30 phr to about 99 phr of a styrene-butadiene rubber, wherein said styrene-butadiene rubber has a Mooney ML 1+4 viscosity which is within the range of about 40 to about 150, (3) a silica filler and (4) a silica coupling agent.

Vinylpyridine containing rubbery polymers having a Mooney ML 1+4 viscosity which is within the range of about 35 to 150 can also be utilized in making the tire tread compounds of this invention. In this case, it is not critical to include a styrene-butadiene rubber having a Mooney viscosity which is within the range of about 40 to about 150 in the rubber compound. In fact, the vinylpyridine containing rubbery polymer employed in this scenario will typically be a terpolymer that contains repeat units that are derived from 1,3-butadiene, styrene and vinylpyridine. Thus, a further embodiment of this invention discloses a rubber compound which is particularly suitable for utilization in making tire treads, said rubber compound being comprised of: (1) a vinylpyridine containing rubbery polymer which is comprised of repeat units which are derived from about 48 to about 99.75 weight percent 1,3-butadiene, from about 0.25 weight percent to about 7 weight percent vinylpyridine and up to about 45 weight percent styrene, wherein said vinylpyridine containing rubbery polymer has a Mooney ML 1+4 viscosity which is within the range of about 35 to about 150, (2) a silica filler and (3) a silica coupling agent.

### Detailed Description of the Invention

The rubber blends of this invention can be beneficially utilized in making tire tread rubber compositions and are comprised of (1) from about 1 phr to about 70 phr of a vinylpyridine containing rubbery polymer, wherein said vinylpyridine containing rubbery polymer contains from about 0.5 weight percent to about 15 weight percent vinylpyridine and wherein said vinylpyridine containing rubbery polymer has a Mooney ML 1+4 viscosity of less than about 25, (2) from about 30 phr to about 99 phr of a styrene-butadiene rubber, wherein said styrene-butadiene rubber has a Mooney ML 1+4 viscosity which is within the range of about 40 to about 150, (3) a silica filler and (4) a silica coupling agent. The term "phr" as used herein stands of parts per 100 parts by weight of rubber. These rubber blends will typically contain from about 5 phr to about 55 phr of the vinylpyridine containing rubbery polymer and from about 45 phr to about 95 phr of the styrene-butadiene rubber. It is normally preferred for the blends of this invention to contain from about 10 phr to about 45 phr of the vinylpyridine containing rubbery polymer and from about 55 phr to about 90 phr of the styrene-butadiene rubber.

The vinylpyridine containing rubbery polymer will contain from about 0.5 weight percent to about 15 weight percent repeat units which are derived from vinylpyridine, based upon the total weight of the polymer. The vinylpyridine containing rubbery polymer will preferably contain from about 1 weight percent to about 12 weight percent vinylpyridine and will most preferably contain from about 2 weight percent to about 10 weight percent vinylpyridine. The vinylpyridine containing rubbery polymer will have a Mooney ML 1+4 viscosity of less than about 25. In most cases, the vinylpyridine containing rubbery polymer will have a Mooney ML 1+4 viscosity which is within the range of about 8 to about 23. It is normally preferred for the vinylpyridine containing rubbery polymer to have a Mooney ML 1+4 viscosity which is within the range of about 10 to about 20.

In many cases, it is preferred for the vinylpyridine containing rubbery polymer to be a vinylpyridine-styrene-butadiene terpolymer rubber. Such vinylpyridine-styrene-butadiene terpolymer rubbers will typically contain from about 0.5 weight percent to about 15 weight percent vinylpyridine, 0.5 weight percent to about 30 weight percent styrene and from about 55 weight percent to about 99 weight percent 1,3-butadiene. It is typically preferred for the vinylpyridine-styrene-butadiene terpolymer rubbers to contain from about 1 weight percent to about 12 weight percent vinylpyridine, 5 weight percent to about 20 weight percent styrene and from about 68 weight percent to about 94 weight percent 1,3-butadiene. It is generally more preferred for the vinylpyridine-styrene-butadiene terpolymer rubbers to contain from about 2 weight percent to about 10 weight percent vinylpyridine, 10 weight percent to about 15 weight percent styrene and from about 75 weight percent to about 88 weight percent 1,3-butadiene.

The styrene-butadiene rubber utilized in the blends of this invention will typically have a bound styrene content which is within the range of about 10 weight percent to about 35 weight percent. In other words, the repeat units in the styrene-butadiene rubber will typically be derived from about 10 weight percent to about 35 weight percent styrene and from about 65 weight percent to about 90 weight percent 1,3-butadiene. The styrene-butadiene rubber will preferably have a bound styrene content which is within the range of about 15 weight percent to about 30 weight percent and will most preferably have a bound styrene content which is within the range of about 20 weight percent to about 25 weight percent. The styrene-butadiene rubber will have a Mooney ML 1+4 viscosity which is within the range of about 40 to about 150. The styrene-butadiene rubber will typically have a Mooney ML 1+4 viscosity which is within the range of about 50 to about 130. The styrene-butadiene rubber will preferably have a Mooney ML 1+4 viscosity which is within the range of about 60 to about 110.

In another embodiment of this invention, a vinylpyridine containing rubbery polymers having a Mooney ML 1+4 viscosity which is within the range of about 35 to 150 is utilized in making tire tread compounds. In this case, it is not critical to include a styrene-butadiene rubber having a Mooney viscosity which is within the range of about 40 to about 150 in the rubber compound. In this scenario the rubbery vinylpyridine containing polymer contains repeat units that are derived from 1,3-butadiene, vinylpyridine, and in most cases styrene. These rubbery vinylpyridine containing polymers typically contain from about 48 weight percent to about 99.75 weight percent 1,3-butadiene, from about 0.25 weight percent to about 7 weight percent vinylpyridine, and from 0 to about 45 weight percent styrene. These vinylpyridine containing rubbery polymers preferably contain from about 60 weight percent to about 84.5 weight percent 1,3-butadiene, from about 0.5 weight percent to about 5 weight percent vinylpyridine, and from 15 weight percent to about 30 weight percent styrene. It is most preferred for such vinylpyridine containing rubbery polymers to contain from about 72 weight percent to about 79 weight percent 1,3-butadiene, from about 1 weight percent to about 3 weight percent vinylpyridine, and from 20 weight percent to about 25 weight percent styrene. These vinylpyridine containing rubbery polymers will preferably have a Mooney ML 1+4 viscosity which is within the range of about 40 to about 100 and will most preferably have a Mooney ML 1+4 viscosity which is within the range of about 45 to about 60.

The rubber compounds of this invention will also contain a silica filler and a silica coupling agent. The filler can, of course, be comprised totally of silica. However, in some cases, it will be beneficial to utilize a combination of silica and carbon black as the filler. Clays and/or talc can be included in the filler to reduce cost.

The processing of the rubber compound is normally conducted in the presence of a silica coupling agent that is a sulfur containing organosilicon compound to realize maximum benefits. Examples of suitable sulfur-containing organosilicon compounds are of the formula:

Z-Alk-Sₙ-Alk-Z (I)

in which Z is selected from the group consisting of 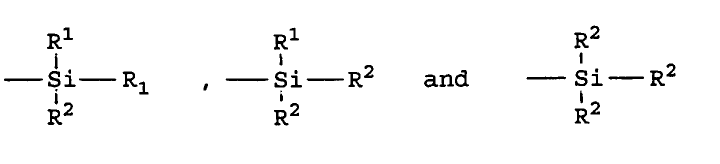 where R¹ is an alkyl group of 1 to 4 carbon atoms, cyclohexyl or phenyl; wherein R² is alkoxy of 1 to 8 carbon atoms or cycloalkoxy of 5 to 8 carbon atoms; and wherein Alk is a divalent hydrocarbon of 1 to 18 carbon atoms and n is an integer of 2 to 8.

Specific examples of sulfur-containing organosilicon compounds which may be used in accordance with the present invention include: 3,3'-bis(trimethoxysilylpropyl) disulfide, 3,3'-bis(triethoxysilylpropyl) tetrasulfide, 3,3'-bis(triethoxysilylpropyl) octasulfide, 3,3'-bis(trimethoxysilylpropyl) tetrasulfide, 2,2'-bis(triethoxysilylethyl) tetrasulfide, 3,3'-bis(trimethoxysilylpropyl) trisulfide, 3,3'-bis(triethoxysilylpropyl) trisulfide, 3,3'-bis(tributoxysilylpropyl) disulfide, 3,3'-bis(trimethoxysilylpropyl) hexasulfide, 3,3'-bis(trimethoxysilylpropyl) octasulfide, 3,3'-bis(trioctoxysilylpropyl) tetrasulfide, 3,3'-bis(trihexoxysilylpropyl) disulfide, 3,3'-bis(tri-2''-ethylhexoxysilylpropyl) trisulfide, 3,3'-bis(triisooctoxysilylpropyl) tetrasulfide, 3,3'-bis(tri-t-butoxysilylpropyl) disulfide, 2,2'-bis(methoxy diethoxy silyl ethyl) tetrasulfide, 2,2'-bis(tripropoxysilylethyl) pentasulfide, 3,3'-bis(tricyclonexoxysilylpropyl) tetrasulfide, 3,3'-bis(tricyclopentoxysilylpropyl) trisulfide, 2,2'-bis(tri-2''-methylcyclohexoxysilylethyl) tetrasulfide, bis(trimethoxysilylmethyl) tetrasulfide, 3-methoxy ethoxy propoxysilyl 3'-diethoxybutoxysilylpropyltetrasulfide, 2,2'-bis(dimethyl methoxysilylethyl) disulfide, 2,2'-bis(dimethyl sec.butoxysilylethyl) trisulfide, 3,3'-bis(methyl butylethoxysilylpropyl) tetrasulfide, 3,3'-bis(di t-butylmethoxysilylpropyl) tetrasulfide, 2,2'-bis(phenyl methyl methoxysilylethyl) trisulfide, 3,3'-bis(diphenyl isopropoxysilylpropyl) tetrasulfide, 3,3'-bis(diphenyl cyclohexoxysilylpropyl) disulfide, 3,3'-bis(dimethyl ethylmercaptosilylpropyl) tetrasulfide, 2,2'-bis(methyl dimethoxysilylethyl) trisulfide, 2,2'-bis(methyl ethoxypropoxysilylethyl) tetrasulfide, 3,3'-bis(diethyl methoxysilylpropyl) tetrasulfide, 3,3'-bis(ethyl di-sec. butoxysilylpropyl) disulfide, 3,3'-bis(propyl diethoxysilylpropyl) disulfide, 3,3'-bis(butyl dimethoxysilylpropyl) trisulfide, 3,3'-bis(phenyl dimethoxysilylpropyl) tetrasulfide, 3-phenyl ethoxybutoxysilyl 3'-trimethoxysilylpropyl tetrasulfide, 4,4'-bis(trimethoxysilylbutyl) tetrasulfide, 6,6'-bis(triethoxysilylhexyl) tetrasulfide, 12,12'-bis(triisopropoxysilyl dodecyl) disulfide, 18,18'-bis(trimethoxysilyloctadecyl) tetrasulfide, 18,18'-bis(tripropoxysilyloctadecenyl) tetrasulfide, 4,4'-bis(trimethoxysilyl-buten-2-yl) tetrasulfide, 4,4'-bis(trimethoxysilylcyclohexylene) tetrasulfide, 5,5'-bis(dimethoxymethylsilylpentyl) trisulfide, 3,3'-bis(trimethoxysilyl-2-methylpropyl) tetrasulfide, 3,3'-bis(dimethoxyphenylsilyl-2-methylpropyl) disulfide.

The preferred sulfur-containing organosilicon compounds are the 3,3'-bis(trimethoxy or triethoxy silylpropyl) sulfides. The most preferred compound is 3,3'-bis(triethoxysilylpropyl) tetrasulfide. Therefore, as to Formula I, preferably Z is 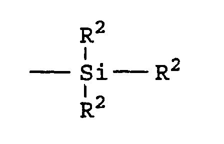 where R² is an alkoxy of 2 to 4 carbon atoms, with 2 carbon atoms being particularly preferred; Alk is a divalent hydrocarbon of 2 to 4 carbon atoms with 3 carbon atoms being particularly preferred; and n is an integer of from 3 to 5 with 4 being particularly preferred.

The amount of the sulfur-containing organosilicon compound in a rubber composition will vary, depending on the level of silica and the level of the vinylpyridine containing rubbery polymer that is used. Generally speaking, the amount of the sulfur-containing organosilicon compound will range from about 0.01 to about 1.0 parts by weight per part by weight of the silica. Preferably, the amount will range from about 0.02 to about 0.4 parts by weight per part by weight of the silica. More preferably, the amount of the sulfur-containing organosilicon compound will range from about 0.05 to about 0.25 parts by weight per part by weight of the silica.

In addition to the sulfur-containing organosilicon, the rubber composition should contain a sufficient amount of silica, and carbon black, if used, to contribute a reasonably high modulus and high resistance to tear. The silica filler may be added in amounts ranging from about 10 phr to about 250 phr. Preferably, the silica is present in an amount ranging from about 15 phr to about 80 phr. If carbon black is also present, the amount of carbon black, if used, may vary. Generally speaking, the amount of carbon black will vary from about 5 phr to about 80 phr. Preferably, the amount of carbon black will range from about 10 phr to about 40 phr. It is to be appreciated that the silica coupler may be used in conjunction with a carbon black (namely, pre-mixed with a carbon black prior to addition to the rubber composition) and such carbon black is to be included in the aforesaid amount of carbon black for the rubber composition formulation. In any case, the total quantity of silica and carbon black will be at least about 30 phr. The combined weight of the silica and carbon black, as hereinbefore referenced, may be as low as about 30 phr but is preferably from about 45 to about 130 phr.

The commonly employed siliceous pigments used in rubber compounding applications can be used as the silica in this invention, including pyrogenic and precipitated siliceous pigments (silica), although precipitated silicas are preferred. The siliceous pigments preferably employed in this invention are precipitated silicas such as, for example, those obtained by the acidification of a soluble silicate; e.g., sodium silicate.

Such silicas might be characterized, for example, by having a BET surface area, as measured using nitrogen gas, preferably in the range of about 40 to about 600, and more usually in a range of about 50 to about 300 square meters per gram. The BET method of measuring surface area is described in the Journal of the American Chemical Society, Volume 60, page 304 (1930).

The silica may also be typically characterized by having a dibutylphthalate (DBP) absorption value in a range of about 100 to about 400, and more usually about 150 to about 300. The silica might be expected to have an average ultimate particle size, for example, in the range of 0.01 to 0.05 micron as determined by the electron microscope, although the silica particles may be even smaller, or possibly larger, in size.

Various commercially available silicas may be considered for use in this invention such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3.

The rubbery polymers of this invention can be compounded utilizing conventional ingredients and standard techniques. For instance, these rubbery polymers will typically be mixed with silica, optionally additional fillers, sulfur, accelerators, oils, waxes, scorch inhibiting agents and processing aids. In most cases, the rubbery polymer will be compounded with sulfur and/or a sulfur-containing compound, at least one accelerator, at least one antidegradant, at least one processing oil, zinc oxide, optionally a tackifier resin, optionally a reinforcing resin, optionally one or more fatty acids, optionally a peptizer and optionally one or more scorch inhibiting agents. Such blends will normally contain from about 0.5 to 5 phr (parts per hundred parts of rubber by weight) of sulfur and/or a sulfur-containing compound with 1 phr to 2.5 phr being preferred. It may be desirable to utilize insoluble sulfur in cases where bloom is a problem.

The rubber compounds of this invention will also normally include from 0.1 phr to 2.5 phr of at least one accelerator with 0.2 phr to 1.5 phr being preferred. Antidegradants, such as antioxidants and antiozonants, will generally be included in the rubber blend in amounts ranging from 0.25 phr to 10 phr with amounts in the range of 1 phr to 5 phr being preferred. Processing oils will generally be included in the blend in amounts ranging from 2 phr to 100 phr with amounts ranging from 5 phr to 50 phr being preferred. The rubber compounds of this invention will also normally contain from 0.5 phr to 10 phr of zinc oxide with 1 phr to 5 phr being preferred. These blends can optionally contain from 0 phr to 10 phr of tackifier resins, 0 phr to 10 phr of reinforcing resins, 1 phr to 10 phr of fatty acids, 0 phr to 2.5 phr of peptizers and 0 phr to 1 phr of scorch inhibiting agents.

The silica and the organosilicon compound (silica coupling agent) will typically be mixed into the rubber blend utilizing a thermomechanical mixing technique. The mixing of the rubber formulation can be accomplished by methods known to those having skill in the rubber mixing art. For example, the ingredients are typically mixed in at least two stages; namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber, silica and sulfur-containing organosilicon, and carbon black, if used, are mixed in one or more non-productive mix stages. The terms "non-productive" and productive" mix stages are well known to those having skill in the rubber mixing art.

Sulfur-vulcanizable rubber composition containing a sulfur-containing organosilicon compound, a vulcanizable rubber and silica are normally subjected to a thermomechanical mixing step. This thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, conventional thermomechanical working is typically carried out for a duration of time which is within the range of about 2 minutes to about 20 minutes. It is normally preferred for the rubber blend to reach a temperature which is within the range of about 145°C to about 180°C and to be maintained at said temperature for a period of time which is within the range of about 4 minutes to about 12 minutes. In practicing this invention the need for prolonged mixing at elevated temperatures is eliminated. However, the rubber compounds of this invention will be mechanically worked until a temperature within the range of 140°C to 190°C is attained. It is normally preferred for the mixing to be carried out until a temperature within the range of about 145°C to 180°C and most preferable within the range of about 155°C to 170°C is attained.

The rubbery polymers of this invention can be used in tire treads in conjunction with ordinary tire manufacturing techniques. Tires are built utilizing standard procedures with the rubber polymers of this invention simply being substituted for the rubber compounds, such as standard styrene-butadiene rubber, typically used in the tread rubber. After the tire has been built with the rubbery polymers of this invention, it can be vulcanized using a normal tire cure cycle. Tires made in accordance with this invention can be cured over a wide temperature range. However, it is generally preferred for the tires of this invention to be cured at a temperature ranging from about 132°C (270°F) to about 166°C (330°F). It is more typical for the tires of this invention to be cured at a temperature ranging from about 143°C (290°F) to about 154°C (310°F). It is generally preferred for the cure cycle used to vulcanize the tire to have a duration of about 10 minutes to about 20 minutes with a cure cycle of about 12 minutes to about 18 minutes being most preferred.

This invention is illustrated by the following examples which are merely for the purpose of illustration and are not to be regarded as limiting the scope of the invention or the manner in which it can be practiced. Unless specifically indicated otherwise, parts and percentages are given by weight.

### Example 1

In this experiment, vinylpyridine-styrenebutadiene rubbers were synthesized and evaluated in tire tread formulations. In the procedure used, a reactor having a capacity of 10 gallons (37.85 liters) was charged with 33.25 pounds (15.08 kg) of soft water, 16 gms. Tamol SN (sodium salt of condensed naphthalene sulfonic acid, 85 percent active), 40.0 gms tripotassium phosphate, 1046 gms of dehydrogenated rosin acid (potassium salt, 20 percent solution in water at pH 9.5) and 1911 gms of hydrogenated mixed fatty acids (sodium salt, 10 percent solution in water at pH 9.5). The pH of the solution in the reactor was adjusted to 10.2-10.8 with 10 percent sodium hydroxide. Next, to the reactor was added 23.7 gms of a solution of 82 gms water, 11.8 gms of the tetrasodium salt of EDTA and 3.0 gms of ferric sulfate heptahydrate. Then, 1638 gms of styrene and 455 gms of 2-vinylpyridine were added. Next, 27.3 gms of tert-dodecylmercaptan in 91.0 of styrene was added. The reactor was evacuated and 15.03 lbs (6.8 kg) of 1,3-butadiene was added. At 10°C, 10.3 gms of pinane hydroperoxide (44 percent active) in 91.0 gms of styrene was added. The polymerization temperature was 10°C and the agitator speed was 250 rpm. After 6 1/2 hours and about 65 percent conversion, the polymerization was shortstopped with a solution of 455 gms of water, 114 gms of the sodium salt of N,N-diethyldithiocarbamate (40 percent active) and 5.35 gms of N,N-diethylhydroxylamine (85 percent active). After stripping off the unreacted monomers under vacuum at 120°F (49°C), a sample of the latex was coagulated and the crumb rubber dried. The coagulation was carried out by adding the latex to water containing sodium chloride and polyamine. With vigorous stirring at 160°F (71°C), 10 percent sulfuric acid was added slowly to the latex until a pH of 3-4 was reached. The rubber crumb was dried at 150°F (66°C) in a forced air oven. The Mooney viscosity of the rubber was 22. Other properties of the polymer are shown in Table I below.

**TABLE I**

| Example | Approximate Composition | Mooney Viscosity | Bound Styrene | Bound Vinylpyridine | DSC Tg, °C |
|---|---|---|---|---|---|
| 1 | 15S/5VP/80BD | 22 | 13.7% | 5.7% | -60.5 |
| 2 | 10S/10VP/80BD | 16.5 | 11.9% | 11.5% | -61 |
| S = Styrene, VP = Vinylpyridine, BD = Butadiene | | | | | |

In Example 2, 1180 gms of styrene and 908 gms of 2-vinylpyridine were used and 30.03 gms of tertiary dodecyl mercaptan were used and the same experimental procedure was followed as was used in Example 1. Data on the resulting vinylpyridine polymers are shown in Table I.

### Examples 3-5

In this experiment, the vinylpyridine containing rubbery polymers synthesized in Examples 1 and 2 were compounded with Plioflex® 1502 styrene-butadiene rubber and the physical properties of the rubber compounds were evaluated. These rubber compounds were made by mixing 15 parts of the vinylpyridine containing rubbery polymer into 85 parts of the Plioflex® 1502 styrene-butadiene rubber. In Example 4, the compound was made by mixing 15 parts of the vinylpyridine containing rubbery polymer synthesized in Example 1 into the blend and, in Example 5, the compound was made by mixing 15 parts of the vinylpyridine containing rubbery polymer made in Example 2 into the blend. Example 3 was carried out as a control without any of the vinylpyridine containing rubbery polymer being included in the blend. The Plioflex® 1502 styrene-butadiene rubber contained 23.5 percent bound styrene and had a Mooney viscosity of 50.

Non-productive compounds were made by mixing 10 phr of a paraffinic processing oil, 55 phr of silica, 1.5 phr of waxes, 1.75 phr of Si69 coupling agent (as a 50 percent/50 percent blend with carbon black), 3 phr of zinc oxide, 2 phr of stearic acid and 2.5 phr of phenylene diamine antioxidant into the rubber components. These non-productive compounds were mixed for a total mix time of about 3.5 minutes and reached a maximum temperature of about 170°C. This short mix time compares very favorably to the mixing cycle required for conventional silica loaded SBR compounds than contain a silica coupling agent which typically require a total mix time of about 10 minutes. Then, productive compounds were made by mixing 1.6 phr of sulfur, 2.5 phr of sulfenamide accelerator and 0.4 phr of diethyldithiocarbamate ultra-accelerator into the rubber compounds. The rubber compounds were then cured and evaluated for physical properties with the results of this testing being shown in Table II.

**TABLE II**

| Example | 3 | 4 | 5 |
|---|---|---|---|
| VP Level¹ | None² | 5% | 10% |
| 300% Modulus³ | 5.29 MPa | 6.67 MPa | 6.87 MPa |
| DIN Abrasion⁴ | 139 mg/m | 119 mg/m | 109 mg/m |

| | | | |
|---|---|---|---|
| ¹The percentage of vinylpyridine in the vinylpyridine containing rubbery polymer included in the blend is indicated. | | | |
| ²The rubber compound evaluated in Example 3 contained 100 percent styrene-butadiene rubber (no vinylpyridine containing rubbery polymer was included in the blend). | | | |
| ³300 percent Modulus was measured at 100°C. | | | |
| ⁴DIN Abrasion is indicated in mg of rubber lost per meter of test surface. Thus, the lower the number, the better the abrasion resistance of the rubber compound. | | | |

As can be seen from Table II, the vinylpyridine containing rubbery polymers greatly improved the hot tensile modulus and abrasion resistance of the rubber compounds evaluated. The inclusion of the vinylpyridine containing rubbery polymers in the blends also eliminates the need for a prolonged mixing cycle at an elevated temperature. Cost benefits are also attained by reducing the level of silica coupling agent required to attain a desired level of modulus.

### Examples 6-8

The procedure used in Examples 3-5 was repeated in this series of experiments except that the rubber compounds were cured utilizing a lower level of curatives. More specifically, in making the productive compounds, the level of sulfur was reduced to 1.3 phr and the level of sulfenamide accelerator was reduced to 2 phr. The rubber compounds were then cured and evaluated for physical properties with the results of this testing being shown in Table III.

**TABLE III**

| Example | 6 | 7 | 8 |
|---|---|---|---|
| VP Level¹ | None² | 5% | 10% |
| 300% Modulus³ | 3.84 MPa | 4.62 MPa | 5.52 MPa |
| DIN Abrasion⁴ | 159 mg/m | 119 mg/m | 110 mg/m |

| | | | |
|---|---|---|---|
| ¹The percentage of vinylpyridine in the vinylpyridine containing rubbery polymer included in the blend is indicated. | | | |
| ²The rubber compound evaluated in Example 6 contained 100 percent styrene-butadiene rubber (no vinylpyridine containing rubbery polymer was included in the blend). | | | |
| ³300 percent Modulus was measured at 100°C. | | | |
| ⁴DIN Abrasion is indicated in mg of rubber lost per meter of test surface. Thus, the lower the number, the better the abrasion resistance of the rubber compound. | | | |

In an alternative embodiment of this invention polybutadine rubber can be substituted for the SBR employed in the blend. More specifically, in this embodiment of the invention, polybutadiene latex can be blended with the vinylpyridine containing rubbery polymer latex and cocoagulated to produce the rubbey polymer blend which is useful in manufacturing tire tread compounds. Thus, this invention further discloses a rubber blend which is particularly suitable for utilization in making tire tread compounds which is comprised of: (1) from about 1 phr to about 70 phr of a vinylpyridine containing rubbery polymer, wherein said vinylpyridine containing rubbery polymer contains from about 0.5 weight percent to about 15 weight percent vinylpyridine and wherein said vinylpyridine containing rubbery polymer has a Mooney ML 1+4 viscosity of less than about 25, (2) from about 30 phr to about 99 phr of a polybutadiene rubber, wherein said polybutadiene rubber has a Mooney ML 1+4 viscosity which is within the range of about 40 to about 150, (3) a silica filler and (4) a silica coupling agent.

### Example 9

In this experiment, a rubbery terpolymer containing about 1 percent vinylpyridine, about 22 percent styrene and about 77 percent butadiene was synthesized. In the polymerization procedure employed, 33.28 pounds of soft water, 16 grams Tamol SN (sodium salt of condensed naphthalene sulfonic acid, 85 percent active), 40.0 grams of tripotassium phosphate, 1046 grams of dehydrogenated rosin acid (potassium salt, 20 percent solution in water at pH 9.5) and 1911 grams of hydrogenated mixed fatty acids (sodium salt, 10 percent solution in water at pH 9.5) were charged into a 10-gallon reactor. The pH of the solution in the reactor was adjusted to 10.2 to 10.8 with 10 percent sodium hydroxide. The pH of the solution was 10.7. Then, a solution of 455 grams water, 1.82 grams Hampene NaFe from Hamshire Chemical Co (sodium ferric ethylenediamine tetraacetate trihydrate) and 4 grams of sodium formaldehyde sulfoxylate was added to the reactor. Then, 2640 grams of styrene and 91.0 grams of 2-vinylpyridine were added. Next, 16.4 grams of tert-dodecylmercaptan in 91.0 grams of styrene was added. The reactor was evacuated and 13.64 pounds of 1,3-butadiene were added. At 10°C, 10.3 grams of pinane hydroperoxide (44 percent active in 91.0 grams of styrene was added. The emulsion polymerization temperature was 10°C and the agitator speed was 250 rpm. After 4 hours and about 65 percent conversion, the polymerization was shortstopped with a solution of 455 grams of water, 114 grams of the sodium salt of N,N-diethyldithiocarbamate (40 percent active) and 5.35 grams of N,N-diethylhydroxylamine (85 percent active). After stripping off the unreacted monomers under vacuum at 120°F for 2 hours, a sample of the latex was coagulated and the crumb rubber dried. The coagulation was carried out by adding the latex to water containing sodium chloride and polyamine. With vigorous stirring at 160°F, 10 percent sulfuric acid was added slowly to the latex until a pH of 3-4 was reached. The rubber crumb was washed three times with water and dried at 150°F in a forced air oven. The Mooney viscosity of the rubber was determined to be 51 and it was determined to have a glass transition temperature at -52°C.

The bound styrene was determined to be 21.7 percent by FTIR and the bound vinylpyridine was determined to be 1.5 percent from Carlo Erba nitrogen analysis. The glass transition temperature was determined by DSC (Differential Scanning Calorimetry) and is the onset glass transition temperature.

### Examples 10-11

In Example 11, the terpolymer containing 1.5 percent vinylpyridine, 22 percent styrene and 77 percent 1,3-butadiene synthesized in Example 10 was compounded as described in Examples 3-6 and compared to a Plioflex® 1502 styrene-butadiene rubber control (Example 10). The results of testing the cured rubber samples are reported in Table IV.

**TABLE IV**

| Example | 10 (SBR Control) | 11 (VP Rubber) |
|---|---|---|
| 100% Modulus | 1.54 MPa | 2.3 MPa |
| 300% Modulus | 5.85 MPa | 8.64 MPa |
| Rebound at 100°C | 62.1 | 70.1 |
| DIN Abrasion¹ | 151 mg/m | 128 mg/m |

| | | |
|---|---|---|
| ¹DIN Abrasion is indicated in mg of rubber lost per meter of test surface. Thus, the lower the number, the better the abrasion resistance of the rubber compound. | | |

The higher level of rebound observed in Example 10 is indicative of good rolling resistance when used in tire tread rubber compounds. As can be seen from Table IV, the modulus and abrasion resistance of the rubber samples was also greatly improved by including a small amount of vinylpyridine in the styrenebutadiene rubber.

Variations in the present invention are possible in light of the description of it provided herein. While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. A rubber blend which is particularly suitable for utilization in making tire tread compounds which is characterized by being comprised of: (1) from 1 phr to 70 phr of a vinylpyridine containing rubbery polymer, wherein said vinylpyridine containing rubbery polymer contains from 0.5 weight percent to 15 weight percent vinylpyridine and wherein said vinylpyridine containing rubbery polymer has a Mooney ML 1+4 viscosity of less than 25, (2) from 30 phr to 99 phr of an additional rubber selected from the group consisting of styrene-butadiene rubber and polybutadiene rubber, wherein said additional rubber has a Mooney ML 1+4 viscosity which is within the range of 40 to 150, (3) a silica filler and (4) a silica coupling agent.

2. A rubber blend as specified in claim 1 characterized in that the additional rubber is a styrene-butadiene rubber having a bound styrene content which is within the range of 10 weight percent to 35 weight percent.

3. A rubber blend as specified in claim 1 or 2 characterized in that from 5 phr to 55 phr of the vinylpyridine containing rubbery polymer and from 45 phr to 95 phr of the styrene-butadiene rubber is present in said rubber blend; characterized in that the vinylpyridine containing rubbery polymer contains from 1 weight percent to 12 weight percent vinylpyridine; and characterized in that said vinylpyridine containing rubbery polymer has a Mooney ML 1+4 viscosity which is within the range of 8 to 23.

4. A rubber blend as specified in claim 1, 2 or 3 characterized in that the styrene-butadiene rubber has a Mooney ML 1+4 viscosity which is within the range of 50 to 130; characterized in that the silica filler is present in an amount which is within the range of 10 phr to 250 phr; characterized in that the silica coupling agent is present in an amount which is within the range of 0.01 to 1 parts by weight per part by weight of the silica present in the blend; and characterized in that the silica has a dibutylphthalate absorption value which is within the range of 100 to 400.

5. A tire which is characterized by including a tread which is comprised of the rubber blend specified in any of the preceding claims.

6. A rubber compound which is particularly suitable for utilization in making tire treads, said rubber compound being characterized by being comprised of: (1) a vinylpyridine containing rubbery polymer which is comprised of repeat units which are derived from 48 to 99.75 weight percent 1,3-butadiene, from 0.25 weight percent to 7 weight percent vinylpyridine and up to 45 weight percent styrene, wherein said vinylpyridine containing rubbery polymer has a Mooney ML 1+4 viscosity which is within the range of 35 to 150, (2) a silica filler and (3) a silica coupling agent.

7. A rubber compound as specified in claim 6 characterized in that the vinylpyridine containing rubbery polymer is comprised of repeat units which are derived from 48 to 99.75 weight percent 1,3-butadiene, from 0.5 weight percent to 5 weight percent vinylpyridine and from 15 weight percent to 30 weight percent styrene; characterized in that the vinylpyridine containing rubbery polymer has a Mooney ML 1+4 viscosity which is within the range of 40 to 100; and characterized in that silica filler is present in an amount which is within the range of 10 phr to 250 phr and wherein the silica coupling agent is present in an amount which is within the range of 0.01 to 1 parts by weight per part by weight of the silica present in the rubber compound.

8. A rubber compound as specified in claim 6 or 7 characterized in that the vinylpyridine containing rubbery polymer is comprised of repeat units which are derived from 60 to 84.5 weight percent 1,3-butadiene, from 1 weight percent to 3 weight percent vinylpyridine and from 20 weight percent to 25 weight percent styrene; characterized in that the vinylpyridine containing rubbery polymer has a Mooney ML 1+4 viscosity which is within the range of 45 to 60; and characterized in that the silica has a dibutylphthalate absorption value which is within the range of 100 to 400.

9. A rubber compound as specified in claim 6, 7 or 8 characterized in that silica filler is present in an amount which is within the range of 15 phr to 80 phr and wherein the silica coupling agent is present in an amount which is within the range of 0.02 to 0.04 parts by weight per part by weight of the silica present in the rubber compound.

10. A rubber compound as specified in claim 6, 7, 8 or 9 characterized in that the silica coupling agent is present in an amount which is within the range of 0.05 to 0.25 parts by weight per part by weight of the silica present in the rubber compound.
